Europäisches Patentamt

European Patent Office

Office européen des brevets

(19)

(11) Veröffentlichungsnummer : **0 111 860**
**B1**

(12) # EUROPÄISCHE PATENTSCHRIFT

(45) Veröffentlichungstag der Patentschrift :
**26.04.89**

(51) Int. Cl.⁴ : **B 29 C 67/22**, C 08 J 9/36,
B 29 C 71/02

(21) Anmeldenummer : **83112456.5**

(22) Anmeldetag : **10.12.83**

(54) Verfahren zum Modifizieren von elastischen Aminoplast-Schaumstoffen.

(30) Priorität : **16.12.82 DE 3246538**

(43) Veröffentlichungstag der Anmeldung :
**27.06.84 Patentblatt 84/26**

(45) Bekanntmachung des Hinweises auf die Patenterteilung : **26.04.89 Patentblatt 89/17**

(84) Benannte Vertragsstaaten :
**AT CH DE FR GB IT LI NL SE**

(56) Entgegenhaltungen :
**CH–A– 412 317**
**DE–B– 1 301 548**
**FR–A– 1 108 336**
**US–A– 2 384 387**
**US–A– 3 125 621**
**US–A– 3 504 064**

(73) Patentinhaber : **BASF Aktiengesellschaft**
**Carl-Bosch-Strasse 38**
**D-6700 Ludwigshafen (DE)**

(72) Erfinder : **Sabater, Eudaldo**
**Schaeferwaeldchen 36**
**D-6733 Hassloch (DE)**
Erfinder : **Mahnke, Harald, Dr.**
**Osloer Weg 48**
**D-6700 Ludwigshafen (DE)**
Erfinder : **Schlemmer, Lothar**
**Duisbergstrasse 1 a**
**D-6701 Maxdorf (DE)**
Erfinder : **Weber, Heinz, Dr.**
**Am Wehrhaus 26**
**D-6718 Gruenstadt (DE)**
Erfinder : **Woerner, Frank Peter, Dr.**
**Am Altenbach 18**
**D-6706 Wachenheim (DE)**

EP 0 111 860 B1

**Beschreibung**

Die Erfindung betrifft ein Verfahren zur Herstellung von elastischen Melaminharz-Schaumstoffen mit hoher Zug- und Weiterreißfestigkeit durch Verpressen unter Erhöhung der Dichte. Elastische Melaminharz-Schaumstoffe sind in DE-A 2 915 457, 2 915 467 und 3 109 929 beschrieben. Diese Schaumstoffe zeichnen sich gegenüber allen bekannten Aminoplast-Schaumstoffen insbesondere durch niedrige Stauchhärte, günstigen Elastizitätsmodul und großen Biegeweg beim Bruch aus. Für einige Anwendungsgebiete ist jedoch die Festigkeit der Schaumstoffe zu gering : sie reißen bei starker Beanspruchung und zeigen eine bleibende Verformung. Außerdem sind sie nur mit einiger Vorsicht zu handhaben und weisen einen gewissen Abrieb auf.

Der Erfindung lag also die Aufgabe zugrunde, elastische Melaminharz-Schaumstoffe so zu modifizieren, daß ihre Zug- und Weiterreißfestigkeit erhöht, ihr Druckverformungsrest erniedrigt sowie ihre Handhabbarkeit, Griffestigkeit und Oberflächengüte verbessert wird.

In der DE-A 2 915 467 wird empfohlen, die Melaminharz-Schaumstoffe ein oder mehrere Male um 40 bis 90 % ihrer ursprünglichen Höhe zusammenzupressen und dann wieder ausdehnen zu lassen, um die Elastizität des Schaums weiter zu erhöhen und das Schrumpfen bei der Wärmelagerung zu vermindern. Dieser Walkprozeß muß aber bei Raumtemperatur und bei geringen Drücken vorgenommen werden, weil der Schaum sich sonst nicht mehr wieder ausdehnt. In der US-A 3 063 953 ist ein Verfahren zur Verbesserung der Eigenschaften von Aminoplast-Schaumstoffen durch Verpressen beschrieben. Hierbei werden insbesondere Harnstoffharz-Schäume bei Raumtemperatur mehrere Male verpreßt, wobei sich das Volumen praktisch nicht verringern soll. Durch das Verpressen soll eine Erhöhung der Festigkeit, Nachgiebigkeit und des Rückstellvermögens erreicht werden.

Aus der US-A 3 125 621 ist bekannt, daß hydrophobe, nicht benetzbare Aminoplast-Schaumstoffe auf Basis von Harnstoff-Formaldehyd-Kondensaten durch Verpressen unter Druck bei 52 bis 99 °C zu einem hydrophilen benetzbaren Schaumstoff umgewandelt werden.

Aus der US-A 3 504 064 ist bekannt, daß man Schaumstoffe auf Basis von Harnstoff-Formaldehyd-Kondensaten durch Verpressen in feuchtem Zustand bei 66 bis 100 °C und Trocknen unter Druck zu einem Schaumstoff komprimieren kann, der bei anschließender Behandlung mit Dampf wieder sein ursprüngliches Volumen einnimmt.

Aus der DE-B 1 301 548 ist bekannt, aus Schaumstoffen auf Basis von Mono-, Di- oder Trimethylolketonen zweckmäßig nach Zerkleinerung und unter Mitverwendung eines Bindemittels durch Verpressen in der Kälte oder bei Temperaturen von 80 bis 150 °C Hartschaumplatten herzustellen.

Es wurde gefunden, daß die oben beschriebenen Aufgaben gelöst werden, wenn man elastische Melaminharz-Schaumstoffe bei einer Temperatur zwischen 100 und 300 °C und einem Druck oberhalb von 1,2 bar (Absolutdruck) verpreßt. Dabei soll die Dichte des Schaumstoffs um das 1,5- bis 50-fache erhöht werden.

Gegenstand der Erfindung ist ein Verfahren zur Herstellung von elastischen Melaminharz-Schaumstoffen der Dichte 10 bis 500 g · l$^{-1}$ mit hoher Zug- und Weiterreißfestigkeit, das dadurch gekennzeichnet ist, daß man flächige, elastische Melaminharz-Schaumstoffe unter Erhöhung der Dichte um das 1,5- bis 50-fache bei 100 bis 300 °C und einem Druck von mehr als 1,2 bar verpreßt.

Die elastischen Melaminharz-Schaumstoffe, ihre Herstellung und ihre Eigenschaften sind in den genannten deutschen Offenlegungsschriften ausführlich beschrieben. Sie enthaten mindestens 50 Gew.-% Melamin- und Formaldehyd-Einheiten, sowie ggf. andere übliche Duroplastbilder und Aldehyde einkondensiert. Das Molverhältnis Duroplastbilder : Aldehyd kann in weiten Grenzen zwischen 1 : 1,5 und 1 : 4,5 schwanken ; im Falle von Melamin/Formaldehyd-Kondensaten liegt es vorzugsweise zwischen 1 : 2,5 und 1 : 3,5. Sie werden hergestellt durch Verschäumen von wäßrigen Dispersionen, die das Aminoplast-Vorkondensat, einen Emulgator, ein flüchtiges Treibmittel, einen Härter, sowie zweckmäßigerweise ein Hydrophobierungs- und Stabilisierungsmittel enthalten, wobei vorzugsweise 65 bis 85 Gew.-%ige Dispersionen eingesetzt werden und unter solchen Bedingungen verschäumt wird, daß zunächst nur ein geringer Viskositätsanstieg erfolgt und der Härtungsvorgang unter starker Viskositätserhöhung erst dann einsetzt, wenn der Schäumungsvorgang weitgehend beendet ist. Die dabei erhaltenen Schaumstoffe werden in bevorzugten Ausführungsformen anschließend einem Temper- und einem Walkprozeß unterworfen.

Bei dem erfindungsgemäßen Verfahren werden nun flächige Melaminharz-Schaumstoff d.h. Platten, Streifen oder Bahnen einer Dicke von 0,5 bis 50 cm, vorzugsweise von 1 bis 10 cm bei Temperaturen zwischen 100 und 300 °C und einem Druck oberhalb von 1,2 bar, vorzugsweise zwischen 2 und 30 bar verpreßt, wobei die Preßdauer vorzugsweise mindestens 0,1 min und insbesondere 0,6 bis 10 min beträgt. Melaminharzschäume werden bevorzugt bei Temperaturen zwischen 80 und 280 °C und insbesondere zwischen 220 und 275 °C, verpreßt.

Bei dem erfindungsgemäßen Verpressen findet eine deutliche Erhöhung der Dichte des Schaums um das 1,5- bis 50-fache und insbesondere um das 1,5- bis 10-fache statt. Die Rohdichte (nach DIN 53 420) ist je nach Preßbedingungen (Temperatur, Druck, Dauer) im Bereich von 10 bis 500, vorzugsweise von 20 bis 100 [g · l$^{-1}$] fast beliebig einstellbar. Dadurch können die Eigenschaften zwischen denen von Leichtschaumstoffen und solchen von dichten Vliesstoffen variiert werden.

Duroplaste sind nach DIN 7724 hochvernetzte, nur sehr begrenzt verformbare Materialien. Durch das erfindungsgemäße Verpressen gelingt jedoch eine bleibende, quasiplastische Verformung der Melaminharz-Schaumstoffe. Es kann angenommen werden, daß die langen, dünnen Zellstege, aus denen die offenzelligen Schäume bestehen, beim Verpressen zunehmend mehr in der Ebene senkrecht zur Preßrichtung orientiert und neu fixiert werden, wobei ihre Elastizität erhalten bleibt.

Durch die erfindungsgemäße Modifizierung wird vor allem die Zugfestigkeit bzw. Reißdehnung (nach DIN 53 571) der Schaumstoffe senkrecht zur Preßrichtung drastisch erhöht und der Druckverformungsrest (nach DIN 53 572) erniedrigt, ohne daß die Elastizität spürbar verringert wird. Überraschenderweise wird auch — trotz der starken Verdichtung — die Wärmeleitzahl (nach DIN 52 612) deutlich erniedrigt. Es gelingt, Wärmeleitzahlen $\lambda$, gemessen an trockenen Schaumstoffen einer Dicke von 30 mm bei 10 °C von $0{,}030 \cdot [W \cdot m^{-1} \cdot {}^{o}K^{-1}]$ und weniger, bis herunter zu $0{,}027 \ [W \cdot m^{-1} \cdot {}^{o}K^{-1}]$ zu erreichen. Bei Schaumstoffen, die nur verhältnismäßig wenig verdichtet wurden, z. B. auf das zweifache, tritt durch das Verpressen auch eine Verbesserung der Stauchhärte nach DIN 53 577 (40 % Stauchung) ein.

Das erfindungsgemäße Verpressen kann diskontinuierlich auf üblichen Ein- oder Mehretagen-Plattenpressen oder vorzugsweise kontinuierlich auf Doppelbandpressen, Walzenreckmaschinen, Kalandern oder mehreren hintereinander angeordneten Walzenpaaren vorgenommen werden. Beim Verpressen in Walzenreckmaschinen ist es möglich, die Schaumstoffbahnen gleichzeitig zu verstrecken, z. B. um 5 bis 50 %. Dadurch kann die Festigkeit und Elastizität der Schaumstoffe noch weiter erhöht werden. Die Pressen sind vorzugsweise beheizt, zusätzlich können die Schaumstoffe durch Heißluft, Dampf oder Bestrahlen, z. B. mit Infrarot-Strahlen oder Hochfrequenz vorgeheizt werden. Beim Verpressen kann gleichzeitig eine bleibende Verformung der Schaumstoffe, z. B. zu Halbschalen oder Profilen vorgenommen werden, ferner kann in den Schaumstoff eine Struktur eingeprägt werden und man kann den Schaumstoff kaschieren und laminieren. Die erfindungsgemäß modifizierten Schaumstoffe können nachträglich mit Lösungen oder Dispersionen von Hydrophobierungsmitteln, elastifizierenden Kunststoffen oder von Farbstoffen getränkt oder gestrichen werden, um die Eigenschaften noch weiter zu verbessern.

Anwendungsgebiete sind auf dem Bausektor die Wärme- und Schalldämmung und der Brandschutz von Gebäuden und Gebäudeteilen, die Rohrisolierung, sowie Dämmtapeten und Dekorplatten ; auf dem Textilsektor Vliesstoffe, hitzebeständige Stoffe, Kunstleder und Schutzvorhänge, auf dem Möbelsektor Polstermaterialien und Kernschichten von Sandwichplatten, ferner Filtermaterialien, Asbestersatz, Dichtungsmaterialien, sowie Verstärkungsmaterialien.

Die in den Beispielen genannten Teile und Prozente beziehen sich auf das Gewicht.

## Beispiele 1-10

Ein elastischer Schaumstoff auf Basis eines Melamin/Formaldehyd-Kondensationsproduktes, dessen Herstellung in Anlehnung an das Beispiel der DE-A 30 11 854 erfolgte, jedoch mit einer Harzkonzentration von 72 % an KAURAMIN 650 der BASF, (Melaminharz mit einem Molverhältnis Melamin : Formaldehyd 1 : 3) besaß die in Tab. 1 angegebenen physikalischen Eigenschaften.

Aus diesem Ausgangsmaterial wurde jeweils eine Rechteckplatte mit den Abmessungen 350 × 350 × 100 mm bzw. 350 × 350 × 10 mm in einer elektrisch beheizten und temperaturgeregelten, hydraulischen Plattenpresse in Richtung der kürzesten Raumkoordinate bei den in Tab. 1 angegebenen Temperaturen mit einer Preßgeschwindigkeit von 400 mm/min bis zum Erreichen des in Tab. 1 angegebenen jeweiligen spezifischen Preßdruckes zusammengepreßt. Bei diesen Bedingungen wurde die Preßprobe während der angegebenen Preßzeit gehalten, danach wurde die Pesse gelüftet. Die Probe wurde dann aus der heißen Presse entnommen und bei Raumtemperatur abgekühlt. Nach eintägiger Konditionierung der gepreßten Schaumprobe bei Normalklima 23/50 nach DIN 50014 wurden die Eigenschaftswerte gemäß Tab. 1 gemessen.

Alle Proben wiesen nach dem Pressen verbesserte Oberflächen auf ; die hochverdichteten Proben besaßen außerdem einen lederähnlichen Griff.

## Beispiele 11-13

In diesen Beispielen wurde ein elastischer Schaumstoff auf Basis eines Melamin/Formaldehyd-Kondensationsproduktes verwendet, dessen Herstellung wie in den Beispielen 1 bis 10 erfolgte, aber ohne abschließende Temperbehandlung.

Der so hergestellte Ausgangsschaum, der die in Tab. 2 angegebenen Eigenschaften aufwies, wurde in Form von Rechteckplatten in einer elektrisch beheizten, hydraulischen Plattenpresse in Richtung der kürzesten Raumkoordinate bei den in Tab. 2 angegebenen Arbeitsbedingungen verpreßt. Presse und Arbeitsablauf waren gleich wie bei den Beispielen 1-10. Eigenschaften s. Tab. 2.

## Beispiele 14-16

Eine elastische Schaumstoffbahn auf Basis eines Melamin/Formaldehyd-Kondensationsproduktes der gleichen Qualität wie in den Beispielen 1-10 mit dem Querschnitt 350 × 10 mm wurde kontinuierlich durch eine Rollenreckmaschine mit 23 in einer Ebene hintereinander angeordneten beheizten Stahlwalzen mit einem Durchmesser von 45 mm und gleichen Walzenspalten von jeweils 1 mm so durchgeführt, daß die Schaumbahn alle Walzenspalte passierte und jede Walze mit einem Winkel von 180° umschlang. Der Druck in den Walzenspalten betrug etwa 5 bar. Die Durchlaufgeschwindigkeit der Schaumbahn betrug 1 m/min und entsprach den Umfangsgeschwindigkeiten aller Walzen, die teils angetrieben, teils nichtangetrieben waren. Die kontinuierlich verformte Bahn wurde nach Verlassen der Maschine über einen Wickler mit konstantem Zug auf einen Kern von 120 mm Durchmesser aufgewickelt.

Sämtliche Walzen waren über eine temperaturregelbare Druckwasserheizung beheizt.

In den Beispielen 14-16 wurde unter den in Tab. 3 angegebenen Bedingungen gearbeitet. Die Eigenschaften der so behandelten Schaumbahn sind ebenfalls aus Tab. 3 zu ersehen.

## Beispiel 17

Es wurde gearbeitet wie in den Beispielen 14-16, wobei die Walzen jedoch zur Verstreckung der Bahn in 3 Gruppen aufgeteilt waren. Die aus 9 Walzen bestehende angetriebene Einlaufgruppe lief mit Walzenumfangsgeschwindigkeiten von 1 m/min, eine nachfolgende Gruppe von 5 nichtangetriebenen Walzen bildete die Reckstrecke, und die wiederum angetriebene Abzugswalzengruppe, bestehend aus 9 Walzen, lief mit der Umfangsgeschwindigkeit von 1,1 m/min.

Die bei Walzentemperaturen von 160 °C die Maschine durchlaufende Schaumbahn wurde um 10 % in Laufrichtung verstreckt.

Die einen sehr elastischen und vliesähnlichen Charakter aufweisende Preßschaumbahn wies danach die in Tab. 3 aufgeführten Eigenschaften auf.

## Beispiel 18

Ein elastischer Schaumstoff auf Basis eines Harnstoff/Formaldehyd-Kondensationsproduktes wurde entsprechend Beispiel 1 der DE-A 29 50 289 hergestellt und besaß die in Tab. 4 aufgeführten Eigenschaften.

Eine Rechteckplatte dieses Schaumes mit den Abmessungen $210 \times 320 \times 75$ mm wurde wie in Beispiel 1-10 auf einer Plattenpresse bei den ebenfalls in Tab. 4 angegebenen Arbeitsbedindungen verpreßt. Eigenschaften der verpreßten Platte siehe Tab. 4.

## Tabelle 1

| Beispiel | Aus-gangs-dicke [mm] | Preß-tempe-ratur [C°] | Preß-druck [bar] | Preß-zeit [min] | End-dicke [mm] | Roh-dichte [g.l$^{-1}$] | Zugfestig-keit [N/mm$^2$] | Stauch-härte [N/cm$^2$] | Druck-Verform.-Rest [%] | Wärme-leitzahl [W/m°k] |
|---|---|---|---|---|---|---|---|---|---|---|
| Ausgangs-material | | | | | | 10,4 | 0,08 | 0,86 | 23,8 | 0,0348 |
| 1a | 100 | 75 | 2 | 0,5 | 96 | 11,5 | 0,10 | 0,58 | 17,5 | |
| 1 | 100 | 100 | 2 | 6 | 55 | 21,5 | 0,11 | 0,35 | 17,9 | |
| 2 | 10 | 150 | 7 | 3 | 5,5 | 19,0 | 0,13 | 0,38 | 20,2 | |
| 3 | 10 | 200 | 3 | 2 | 3,0 | 30,4 | 0,42 | | | 0,0277 |
| 4 | 10 | 200 | 7 | 5 | 2,0 | 52,4 | 0,24 | | | |
| 5 | 10 | 200 | 11 | 5 | 1,6 | 70,1 | 0,30 | | | 0,0296 |
| 6 | 10 | 250 | 11 | 2 | 0,9 | 97,2 | 0,84 | | | |
| 7 | 10 | 275 | 3 | 5 | 0,8 | 104,3 | 1,02 | | | |
| 8 | 10 | 275 | 7 | 2 | 0,7 | 153,2 | 1,06 | | | |
| 9 | 10 | 275 | 11 | 2 | 0,5 | 279,3 | 1,20 | | | |
| 10 | 10 | 275 | 11 | 5 | 0,4 | 529 | 0,91 | | | |

Tabelle 2

| Beispiel | Ausgangs-dicke [mm] | Preß-temperatur [°C] | Preß-druck [bar] | Preß-zeit [min] | End-dicke [mm] | Roh-dichte [g.l$^{-1}$] | Zugfestig-keit [N/mm$^2$] | Reiß-dehnung [%] |
|---|---|---|---|---|---|---|---|---|
| Ausgangs-material | | | | | | 12 | 0,11 | 5,0 |
| 11 | 20 | 200 | 7 | 5 | 0,8 | 186,9 | 1,21 | 10,5 |
| 12 | 10 | 200 | 7 | 5 | 0,5 | 166,8 | 1,76 | 14,8 |
| 13 | 100 | 200 | 7 | 5 | 3,0 | 261,4 | | |

Tabelle 3

| Beispiel | Ausgangs-dicke [mm] | Walzen-temperatur [°C] | Verweil-zeit [min] | End-dicke [mm] | Roh-dichte [g.l$^{-1}$] | Zugfestig-keit [N/mm$^2$] | Reiß-dehnung [%] | Stauch-härte [N/cm$^2$] 40 % |
|---|---|---|---|---|---|---|---|---|
| Ausgangs-material | | | | | 10,4 | 0,08 | 10,8 | 0,86 |
| 14 | 10 | 130 | 1,7 | 5,9 | 17,1 | | 18,0 | 0,22 |
| 15 | 10 | 160 | 1,7 | 3,9 | 22,6 | | 23,8 | 0,22 |
| 16 | 10 | 120 | 1,7 | 7,0 | 17,6 | | 17,3 | 0,22 |
| 17 | 10 | 160 | 1,6 | 5,0 | 22,7 | 1,3 | 20,0 | 0,34 |

Tabelle 4

| Beispiel | Ausgangs-dicke [mm] | Preß-temperatur [°C] | Preß-druck [bar] | Preß-zeit [min] | End-dicke [mm] | Roh-dichte [g.l$^{-1}$] | Zugfestig-keit [N/mm$^2$] |
|---|---|---|---|---|---|---|---|
| Ausgangs-material | 75 | | | | | 24 | 0,02 |
| 18 | | 80 | 2 | 3 | 13,0 | 97,3 | 0,15 |

## Patentansprüche

1. Verfahren zur Herstellung von elastischen Melaminharz-Schaumstoffen der Dichte 10 bis 500 g · l$^{-1}$ mit hoher Zug- und Weiterreißfestigkeit, dadurch gekennzeichnet, daß man flächige, elastische Melaminharz-Schaumstoffe unter Erhöhung der Dichte um das 1,5- bis 50-fache bei 100 bis 300 °C und einem Druck von mehr als 1,2 bar verpreßt.

2. Verfahren nach Anspruch 1, dadurch gekennzeichnet, daß das Verpressen kontinuierlich vorgenommen wird.

3. Verfahren nach Anspruch 2, dadurch gekennzeichnet, daß die Schaumstoffbahn gleichzeitig mit dem Verpressen um 5 bis 50 % in Laufrichtung verstreckt wird.

## Claims

1. A process for the preparation of a resilient melamine resin foam having a density of from 10 to 500 g · l$^{-1}$ and high tensile strength and tear propagation strength, wherein a sheet-like, resilient melamine resin foam is molded at from 100 to 300 °C and under a pressure of more than 1.2 bar, with a 1.5-fold to 50-fold increase in the density.

2. A process as claimed in claim 1, wherein molding is carried out continuously.

3. A process as claimed in claim 2, wherein the foam web is stretched by 5-50 % in the running direction simultaneously with the molding procedure.

## Revendications

1. Procédé de préparation de matières alvéolaires élastiques en résine mélamine des densités 10 à 500 g · l$^{-1}$ à résistances à la traction et à la déchirure amorcée élevées, caractérisé par le fait que l'on comprime, entre 100 et 300 °C, sous une pression de plus de 1,2 bar, des matières alvéolaires élastiques, plates, en résine de mélamine, en élevant la densité de 1,5 à 50 fois.

2. Procédé selon la revendication 1, caractérisé par le fait que la compression est effectuée de manière continue.

3. Procédé selon la revendication 2, caractérisé par le fait que la bande de matière alvéolaire est, simultanément à la compression, étirée de 5 à 50 % en direction de déplacement.